# EUROPEAN PATENT APPLICATION

(11) **EP 1 813 154 A1**
(43) Date of publication of application: **01.08.2007**
(21) Application number: 06380025.4
(22) Date of filing: 31.01.2006
(51) Int. Cl.: A22C 11/10, A22C 11/12, A22C 11/02

(54) **Process and device for applying sealing staples to a tubular casing**

(71) Applicant: Lorenzo Barroso, Angel, 08310 Argentona (ES)
(72) Inventor: Lorenzo Barroso, Angel, 08310 Argentona (ES)
(74) Representative: SUGRANES - VERDONCES - FERREGÜELA

(57) **Abstract**

Process for applying sealing staples to a tubular casing (2) full of product (3) wherein the nozzle (4) of the product's stuffing tube (9) inside the casing moves from its original position towards a position nearer to the fixed closing matrix (13) so as to correct, at least partially, the original misalignment that exists between the closing point where the sealing staples are applied and the longitudinal axis (6) of the stuffing tube, with the nozzle returning to its original position after the staples have been applied. For this purpose, the stuffing tube's nozzle is displaceable and the device for carrying out the process consists of displacement means (16) that convey the nozzle in a forward and backward movement towards and away from the end of the stuffing tube in each operative cycle of the device.

## Description

### Technical sector of the invention

The invention relates to a process for dividing a tubular, flexible, casing full of product into portions, through applying sealing staples that constrict the casing and seal the ends of the respective portions.

### Background to the invention

Manufacturing processes for products packed in flexible, tubular casings or skins, such as cooked meats or sausages, normally entail the product being stuffed into the casing that is closed at one end, and sealing the opposite end through applying a closing staple.

In continuous manufacturing processes, the nozzle of the stuffing tube, which is inside the tubular casing, stuffs the product into the casing that has already had the far end sealed, gradually filling the casing and forming a full portion of product. Said portion of filled casing travels over the cutting space in a support plate equipped with a rotating closing piece, that closes the cutting gap when a predetermined length of said portion has passed over it, compressing the casing that is full of product, reducing its cross-section, and taking it to a closing position wherein the casing is forced to rest against a fixed matrix of a stapling device that applies two closing staples in the zone of the constricted casing; these staples form, respectively, the end of the portion of full casing and the beginning of the following portion of casing that is to be stuffed, forming consecutive packaged portions of the product. The subsequent cutting of the casing in the centre of the portion delimited by these two sealing staples separates the packed portions thus manufactured.

When the stuffing tube pushes the product into the casing with the end closed, the portion of full casing that is formed essentially extends in the direction of the axis of the stuffing tube, but for the application of the closing staples, the constricted zone of the casing is displaced by the closing device towards the fixed matrix of the stapling device, which is necessarily out of alignment with the end of the axis of the stuffing tube so as not to interfere with the passage of the portion of filled casing whereon the staples are precisely to be applied through the cutting space in the support plate.

This situation of misalignment gives rise to an excessive strain on the portion of the casing immediately upstream of the constricted zone, since it is stretched in the direction towards the matrix at the same time that the product stuffed inside it, on having the section of the casing reduced, is compressed and exerts pressure against the internal surface of the skin or casing; this can cause the skin to break and consequently, stoppage of the production process.

Machines are known which solve this problem, wherein the matrix for the stapling device is not fixed, in such a way that it is withdrawn to leave space for the full casing that is to be closed or sealed, whilst this moves again to apply the staples to the casing once it has been constricted and its section has been reduced.

Thus, the patent documents DE-A2344226 and DE-A2550042 disclose for this purpose, two pairs of movement plates that are first closely together in the axial direction of the casing that is full of product during the constriction process, but afterwards separate in an axial direction after constriction, creating a length of longitudinal section that is basically without any stuffing within the casing, aligned in relation to the longitudinal axis of the stuffing tube, and at this point the two closing staples are applied. For this purpose, the closing device is configured in such a way that the stapling device can move, so that firstly it can be withdrawn from the zone occupied by the cross-section of the stuffed casing, and it is only after strangulation takes place that it moves to the position wherein the staples are applied. Naturally, the separation between the plates after the constriction must be of sufficient width so that the stapling device has access to the length of constricted casing.

The complexity of these machines entail significant increases in their price and at times their calibration and maintenance are difficult; this means that there is an evident lack of a process and device that solves the aforementioned problems, requiring simpler construction and execution than the known processes and machinery, and therefore, less expensive.

### Explanation of the invention

The process for applying closing staples, the object of this invention, is particularly aimed at sealing staples in tubular, flexible casings, full of product, that extend longitudinally in relation to the longitudinal axis of the stuffing tube for the said casing, and that pass over the cutting space on the plate that supports the closing matrix for the staples, equipped with a rotating closing arm that closes the cutting space, compressing an area of the casing that is full of product, whilst it reduces its cross-section and carries it towards the closing point, which is misaligned in relation to the longitudinal axis of the stuffing tube, wherein the casing rests against the closing matrix of the stapling device, so as to subsequently apply at least one closing staple.

The process of the invention is essentially characterised in that the nozzle of the product's stuffing tube moves from its original position towards a position that is closer to the closing matrix, fixed, thus correcting at least partially the misalignment of the closing point with the longitudinal axis of the stuffing tube before the closing staples are applied the nozzle returning to its original position after the closing staples have been applied.

This displacement of the stuffing tube's nozzle prevents unwanted excess stress in the portion of the casing immediately upstream of the zone constricted by the rotating closing arm. The tubular casing is essentially kept stretched in the same direction, with any bending being eliminated, and therefore any accumulation of product in said bent zones.

Another characteristic of the process of the invention, is that the nozzle of the stuffing tube moves before the sealing staples are applied, taking place simultaneously with the compression of the full skin through the rotating closing piece and the movement of the casing towards the closing point.

In accordance with another aspect of the invention, a device is discloses for applying staples to a flexible casing full of product according to said process. The device is of the type that comprise a stuffing tube provided with a nozzle that is aligned inside the casing, through which the product is stuffed or injected, forming portions of product inside the cases that are essentially produced along the direction of the longitudinal axis of the stuffing tube's nozzle, and that pass over the cutting space on a support plate attached to the closing matrix for the staples in a stapling machine. The support plate is equipped with a rotating closing arm that when it rotates constricts a predetermined zone of the casing that is full of stuffed product, that limits and determines the length of an individual piece of casing full of stuffed product, and at the same time moves the full casing towards the closing point, out of alignment with the longitudinal axis of the stuffing tube, for the application of at least once closing staple that seals the length of full casing, constituting the portion of stuffed product, against the matrix of the fixed closing plate.

Essentially, the device is characterised in that the nozzle of the stuffing tube is displaceable and because the tube is provided with displacement means to displace said nozzle from its original position - stuffing - to a final position that is closer to the closing matrix, whereby the original misalignment between the closing point and the longitudinal axis of the stuffing tube's nozzle is at least partially corrected before the closing staples are applied.

According to another characteristic of the device, the displacement means comprise an arm fixed to the stuffing tube's nozzle, operated electrically or hydraulically, that displaces the stuffing tube's nozzle in a forwards and backwards fashion, from its original position to the extended position and then back again in every operating cycle (nearer or further away from the closing matrix).

In accordance with another characteristic of the invention, the stuffing tube's nozzle is joined in an articulated fashion, and in a watertight way, to the first stretch of the stuffing tube, through which the product to be encased is introduced at its far end.

### Brief description of the drawings

The enclosed drawings illustrate in a schematic fashion, different sequences of the process for dividing a tubular casing full of product into portions, through applying sealing staples that constrict the casing, as well as a detail of a device for carrying out this process. In said drawings:
- Figs. 1 and 2: are schematic views, front and lateral respectively, of a portion of casing full of product, before the casing is constricted;
- Figs. 3 and 4: are schematic views, front and lateral respectively, of the portion of casing shown in Fig. 1, wherein the casing is constricted by the rotating closing arm, as the stage before the closing staples are applied in a conventional fashion;
- Figs. 5 and 6: are schematic views, front and lateral respectively, of the portion of casing of Fig. 1, wherein the casing is constricted by the rotating closing arm, before the closing staples are applied, showing the nozzle of the stuffing tube displaced from its original position; and
- Fig. 7: is a schematic view of a device for carrying out the process of this invention.

### Detailed description of the drawings

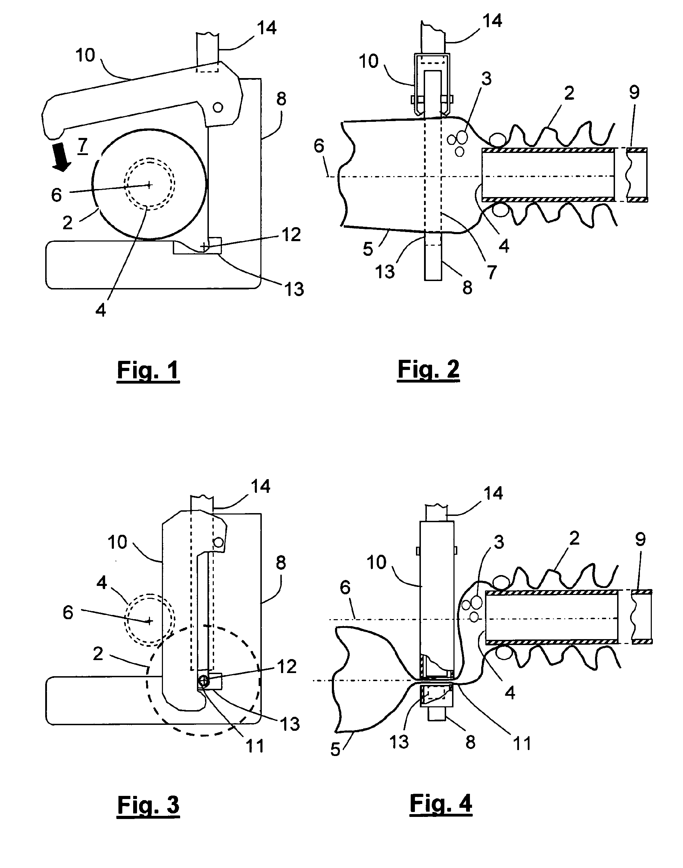

Fig. 1 shows a front view of a portion (5) of casing (2) full of product (3) that is stuffed into said casing (2) through the nozzle (4) of a stuffing tube (9).

This portion (5) of casing (2) full of product (3) extends longitudinally in respect of the longitudinal axis (6) of the stuffing tube (9) and its nozzle (4), as shown in Fig. 2, with its length increasing as the nozzle (4) injects or stuffs the product (3) in the casing (2) for the manufacture of a piece of stuffed product such as a sausage.

The prolongation of the portion 5 passes through, without any obstacles, the cutting space 7 of the support plate 8 of the closing matrix 13 on a conventional stapling device 14, with the support plate 8 equipped with a rotating closing arm 10, which when a predetermined length of portion 5, has passed through, equivalent to a length of an individual piece of stuffed product, the cutting space 7,when this is activated, rotates in the direction shown by the arrow in Fig. 1 constricting zone 11 of the casing that limits the length of the piece to be manufactured, moving from zone 11 to the closing point 12 wherein constricted zone 11 of casing 2 rests against the matrix 13 of the sealing staples. This closing matrix 13 is fixed and configured in such a way that the closing staples applied to zone 11 of the casing, by the stapling machine 14, are closed by pressure against the matrix. The sealing staples constrict the casing permanently and seal the ends of the manufactured pieces. More specifically, two staples are applied, which respectively constitute the top end of the recently stuffed casing and the bottom end of the next portion of casing to be stuffed, thus forming consecutive pieces of stuffed product. Subsequent cutting of the casing in the centre of the portion delimited by these staples separates the pieces of stuffed product thus manufactured.

Because the closing matrix 13 is fixed, the casing zone 11 must be moved towards the closing point 12 so that this can rest against the closing matrix 13. What happens is that the closing point 12 is misaligned in respect of the longitudinal axis 6 of the stuffing tube 9, and therefore out of alignment with the longitudinal axis of the portion 5 full of product 3 whereon the closing staples are to be applied. Consequently, when the rotating closing arm 10 compresses the casing zone 11, this is effectively put under stress and stretched by said closing piece 10, giving rise to an unwanted excess of strain that can accelerate the tearing of the casing 2.

In fact, Figs. 3 and 4 show the distance existing between the closing point 12 and the longitudinal axis 6 of the stuffing tube 9. In particular, Fig. 3 shows the trajectory of the casing 2 in the zone immediately before the zone 11 constricted by the rotating closing piece 10. One can see in Fig. 3 that the portion of casing 2 corresponding to its upper half is longer than the portion corresponding to its lower half, since the upper half of nozzle 4 is further away from the closing point than the lower end of nozzle 4.

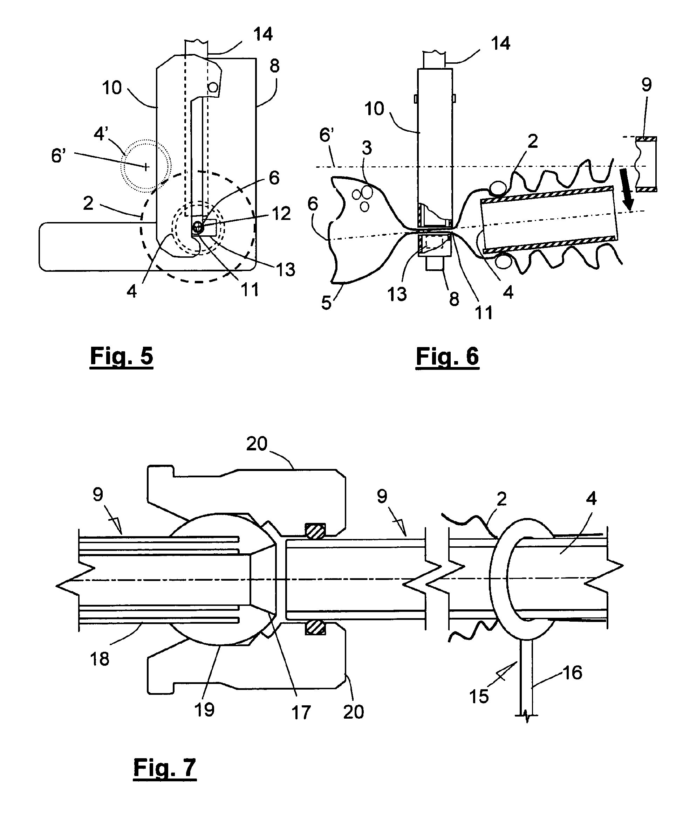

To prevent this happening, and in accordance with the process of the invention, nozzle 4 of the stuffing tube 9 moves from its original stuffing position, shown in Figs. 1 and 2, towards a position that is closer to the closing matrix 13 as shown by the arrow in Fig. 6, rectifying, at least partially, the misalignment of closing point 12 with the longitudinal axis 6 of the stuffing tube. This situation is shown in figures 5 and 6, wherein the prolongation of the longitudinal axis 6 of the nozzle coincides with the closing point 12 and the closing matrix 13.

The displacement of nozzle 4 of the stuffing tube 9 preferably takes place at the same time as the compression and conveying of zone 11 of casing 2 takes place produced by the rotating closing arm 10, coordinating both movements.

Once nozzle 4 is in position and casing 2 is constricted, the sealing staples are applied to the casing and then the rotating closing arm 10 and nozzle 4 of the stuffing tube 9 return to their original position as shown in Figs. 1 and 2.

To materialise the process of the invention it is foreseen that the nozzle 4 will be adapted and provided with a device for applying closing staples to a tubular, flexible casing 2 full of product 3 in such a way that it can be actively displaced. For this purpose, the device that as an example of its embodiment, is represented in Fig. 7 comprises displacement means 15 adapted to displace said nozzle 4 from an original position A of stuffing, to a final position B, nearer to the closing matrix, before the closing staples are applied. These displacement means 15 comprise a moving arm 16 linked in a fixed way to the nozzle 4 of the stuffing tube 9, electrically or hydraulically powered, such as by a hydraulic piston for example, and that conveys in a forward and backward movement, nozzle 4 of the stuffing tube 9 from said original position A, stuffing, to final position B, and vice versa in every operative cycle of the device.

Nozzle 4 of the stuffing tube 9 is joined in an articulated fashion and in a watertight way to a fixed length of the stuffing tube 9, at the far end of which the product 3 to be stuffed into the casing 2 is introduced through a silo. This articulated joint can be formed by, for example, a flexible stretch of tubing, one of whose ends would be connected to nozzle 4, displaceable, as long as the opposite end would be joined to the open end of the fixed length of the stuffing tube 9. Alternatively, as is shown in Fig. 7, the open end 17 of the fixed length 18 of the stuffing tube 9 is fixed with an external spherical surround 19 and an increasing section in the direction of product 3 advance within said tube, at the same time as nozzle 4 is equipped with a linking body 20 so as to receive, in an adjustable fashion, by way of clamping, and with the possibility of rotation, the external spherical surround 19 of the fixed length 18 of the stuffing tube 9, whose section encloses, at least partially, the increasing section of the open end 17 of the fixed end of the stuffing tube.

## Claims

1. Process for applying closing staples to a flexible, tubular casing (2), full of product (3), wherein one end (5) of said filled tubular casing, longitudinally extended in respect of the longitudinal axis (6) of the stuffing tube (9) of the product in said casing, passes through the cutting space (7) of the support plate (8) of the closing matrix (13) for the staples of a stapling device (14), provided with a rotating closing arm (10) that closes said cutting space, compressing a zone (11) of the casing full of product, reducing its cross-section and conveying it to a closing point (12), which is out of alignment with the longitudinal axis of the stuffing tube, wherein the casing rests against the closing matrix of the stapling device, so as to subsequently apply at least one closing staple, **characterised in that** the nozzle (4) of the product stuffing tube moves from its original position to a place that is closer to the closing matrix, fixed, thus correcting, at least partially the misalignment that exists between the closing point and the longitudinal axis of the stuffing tube, with the nozzle returning to its original position after the staples have been applied.

2. Process according to claim 1, **characterised in that** the movement of the nozzle (4) of the stuffing tube (9), before the staples are applied, is simultaneous with compression exerted by the closing rotating arm (10), exerted on the casing (2) filled, and its conveyance towards the closing point (12).

3. Device for applying sealing staples to a tubular, flexible casing (2) filled with product (3), with the device comprising a stuffing tube (9) provided with a nozzle (4) arranged inside the casing, through which the product is injected or stuffed into the casing, forming portions (5) of casing or skin full of product that essentially extend in the same direction as the longitudinal axis (6) of the stuffing tube's nozzle and pass through the cutting space (7) on a support plate (8) of the closing matrix (13) below the stapling device (14). The support plate is provided with a rotating closing arm (10) that when it moves constricts a predetermined zone (11) of a predetermined length of casing full of product that limits and determines the length of an individual piece of stuffed product, and at the same time conveys the zone of the constricted casing towards the closing point (12), misaligned in respect of the longitudinal axis of the stuffing tube, for the application, against the fixed closing matrix (13) of at least one closing staple, that seals the stretch of filled casing that forms the piece of stuffed product, **characterised in that** the nozzle of the stuffing tube is displaceable and **in that** the device incorporates displacement means (16), so that it can travel from its original place, stuffing, to a final position nearer to the closing matrix, whereby the original misalignment existing between the closing point and the longitudinal axis of the stuffing tube is at least partially rectified, before the closing staples are applied.

4. Device according to claim 3, **characterised in that** the displacement means (16) consist of an arm (16) linked in a fixed way to the nozzle (4) of the stuffing tube (9), electrically or hydraulically powered, that conveys in its forwards and backwards movements, the nozzle of the stuffing tube from its original position, stuffing, to its final position, nearer to the closing matrix (13), and vice versa in every operational cycle of the device.

5. Device according to claims 3 or 4, **characterised in that** the nozzle (4) of the stuffing tube (9) is linked in an articulated way and in a watertight fashion, to a first fixed stretch (18) of the stuffing tube (9), whereby the product (3) to be stuffed into the casing (2) enters at the far end.
